# EUROPÄISCHE PATENTSCHRIFT

(11) **EP 2 658 055 B1**
(45) Veröffentlichungstag und Bekanntmachung des Hinweises auf die Patenterteilung: **12.08.2015**
(21) Anmeldenummer: 12165988.2
(22) Anmeldetag: 27.04.2012
(51) Int. Cl.: H02G 3/08

(54) **Gehäuse-Bausystem insbesondere für elektrische Geräte**
Housing construction system, in particular for electric devices
Système de construction de boîtiers, en particulier pour les appareils électriques

(43) Veröffentlichungstag der Anmeldung: 30.10.2013
(73) Patentinhaber: GIRA GIERSIEPEN GmbH & Co. KG, 42477 Radevormwald (DE)
(72) Erfinder: Schieffer, Klaus, 51375 Leverkusen (DE)
(74) Vertreter: Patentanwälte Dr. Solf & Zapf

(56) Entgegenhaltungen:
- DE-C1- 4 312 834
- DE-U- 7 442 583
- FR-A- 1 116 722

## Beschreibung

Die vorliegende Erfindung betrifft gemäß dem Oberbegriff des Anspruchs 1 ein Bausystem für Gehäuse, insbesondere für elektrische Geräte, wobei in jeder von mehreren Gehäuseecken zwei Gehäuseprofilabschnitte über einen Eckverbinder verbunden oder verbindbar sind, wobei jeder Eckverbinder zwei Winkelschenkel aufweist, die jeweils axial, in Profil-Längsrichtung derart in Profilnuten der Gehäuseprofilabschnitte eingeschoben oder einzuschieben sind, dass sie die Gehäuseprofilabschnitte in Profil-Querrichtung formschlüssig halten.

Ein solches Bausystem ist durch die DE 43 12 834 C1 oder DE 7442538 U bekannt. Diese Dokumente beschreiben ein Trägerelement für einen Abschluss- und Befestigungsrahmen einer Haus- und Türsprechanlage, wobei mehrere Trägerelemente baukastenartig zusammengesetzt werden. Jedes Trägerelement ist als Hohlprofilabschnitt ausgebildet, der eine Aufnahme in Form einer T-Nut zum Einsetzen eines Steckansatzes eines Eckverbinders aufweist. Demnach werden in den Eckbereichen des jeweiligen Gehäuses bzw. des Abschluss- und Befestigungsrahmens jeweils zwei rechtwinklig angeordnete Hohlprofilabschnitte über einen Eckverbinder verbunden. Bislang wurden dazu die Hohlprofilabschnitte rechtwinklig abgeschnitten, so dass in den Gehäuse-Eckbereichen jeweils der Eckverbinder freiliegt. Üblicherweise bestehen solche Eckverbinder aus Zink-Druckguss, und bei den Hohlprofilabschnitten handelt es sich um Aluminium-Strangpressprofile. Daher ergibt sich wegen unterschiedlicher Materialien in den Gehäuse-Eckbereichen eine Ansicht, die für bestimmte Anwendungen und Einbausituationen nachteilig ist. Außerdem ist jeder Hohlprofilabschnitt mit dem jeweiligen Eckverbinder nur durch Einstecken des Steckansatzes gehalten, weshalb die Steckansätze krallenartige Ansätze aufweisen, die beim Einstecken formschlüssig in das Profil eingreifen sollen. In der Praxis werden hier häufig nicht die gewünschten Haltbarkeiten der Verbindungen erreicht, und die Steckverbindungen sind auch nur sehr bedingt wieder lösbar und in aller Regel keinesfalls wieder montierbar.

Der vorliegenden Erfindung liegt die Aufgabe zu Grunde, ein Bausystem der beschriebenen Art so zu verbessern, dass ein damit aufgebautes Gehäuse in seinen Gehäuseecken mit einer durchweg gleichartigen Oberfläche ausgebildet werden kann und dadurch ein verbessertes äußeres Erscheinungsbild bietet, wobei zudem eine einfache Gehäuse-Montage und bei Bedarf auch eine Demontage sowie auch eine erneute Wiederhol-Montage ermöglicht werden soll.

Erfindungsgemäß wird dies durch ein Bausystem mit den Merkmalen des unabhängigen Anspruchs 1 erreicht. Vorteilhafte Weiterbildungen und Ausgestaltungsmerkmale sind in den abhängigen Ansprüchen sowie auch in der anschließenden Beschreibung enthalten.

Demnach ist erfindungsgemäß vorgesehen, dass in jeder Gehäuseecke die Gehäuseprofilabschnitte endseitig auf Gehrung geschnitten sind und mit entsprechend schrägen Stirnflächen unter äußerer Abdeckung des Eckverbinders direkt aneinander anliegen, wobei die Eckverbinder zumindest paarweise zur Aufnahme von jeweils zwischen den Gehäuseecken in den jeweiligen Profil-Längsrichtungen und/oder diagonal wirkenden Zugkräften miteinander verbunden sind.

Durch diese erfindungsgemäße Ausgestaltung wird somit in jeder Gehäuseecke der Eckverbinder von außen vollständig von den exakt auf Gehrung geschnittenen Gehäuseprofilabschnitten abgedeckt, so dass in jeder Ecke von außen nur die Gehäuseprofilabschnitte mit einem engen Anlagespalt sichtbar sind. Dadurch können die Gehäuseecken vorteilhafterweise mit einer einheitlichen Oberflächengestaltung ausgebildet sein. Die Gehäuseprofilabschnitte können beliebig gestaltete Sichtflächen aufweisen, beispielsweise einheitlich voreloxiert, galvanisiert, verchromt, lackiert oder auch pulverbeschichtet. Die in aller Regel als Druckguss-Formteile ausgebildeten Eckverbinder, die daher nicht beliebig mit der gleichen Oberflächen-Ausführung wie die Gehäuseprofilabschnitte ausgebildet werden könnten, führen nicht mehr zu einer ästhetisch störenden Unterbrechung der Gehäuseprofilabschnitte, weil sie ja von außen vollständig verdeckt innerhalb der Gehäuseprofilabschnitte sitzen.

Die Verbindung der Bestandteile des erfindungsgemäßen Bausystems erfolgt vorteilhafterweise schraubenlos, indem lediglich die Eckverbinder mit ihren Winkelschenkeln kraftschlüssig in die jeweiligen Profilnuten der Gehäuseprofilabschnitte eingeschoben werden. In der lagerichtigen Position werden zum Spannen und Fixieren der Eckverbindungen die Eckverbinder so miteinander verbunden, dass alle durch Haltespannkräfte der Eckverbindungen auftretenden, in den jeweiligen Profil-Längsrichtungen und/oder diagonal wirkenden Zugkräfte aufgenommen und die Gehäuseprofilabschnitte über die Eckverbinder sicher zusammengehalten werden, obwohl die Eckverbinder mit ihren Winkelschenkeln lediglich kraftschlüssig - und daher grundsätzlich axial verschiebbar und auch durch einfaches Herausziehen bei Bedarf problemlos lösbar - in die jeweiligen Profilnuten der Gehäuseprofilabschnitte eingeschoben sind.

In bevorzugter Ausgestaltung sind alle Eckverbinder über ein starres, formstabiles, aus einem Flachmaterial bestehendes und in einer von den Gehäuseprofilabschnitten umschlossenen Ebene liegendes Verbinderelement verbunden. Hierbei ist weiterhin bevorzugt vorgesehen, dass das Verbinderelement als eine im Wesentlichen - das heißt abgesehen von eventuellen Durchführöffnungen für Befestigungselemente, elektrische Leitungen und/oder dergleichen - flächig geschlossene, mit Außenrändern in zusätzlichen Profilnuten der Gehäuseprofilabschnitte sitzende Gehäusewand ausgebildet ist. Diese Gehäusewand bildet insbesondere eine Rückwand des Gehäuses.

Alternativ dazu kann das Verbinderelement auch als eine mindestens eine Rahmenöffnung aufweisende, ebenfalls mit Außenrändern in zusätzlichen Profilnuten der Gehäuseprofilabschnitte sitzende Rahmenwand ausgebildet sein. Als weitere Alternative kann als Verbinderelement grundsätzlich auch ein Diagonal-Kreuzverbinder mit gekreuzten Diagonalstreben vorgesehen sein.

In allen Fällen weist das Verbinderelement im Bereich jeder Gehäuseecke einen Eckenabschnitt auf, der mit seinen Außenrändern in den zusätzlichen Profilnuten der Gehäuseprofilabschnitte sitzt und dadurch in einer zur Ebene des jeweiligen Eckverbinders parallel versetzten Ebene liegt, wobei jeder Eckverbinder und der zugehörige Eckenabschnitt des Verbinderelementes im inneren Winkelbereich der angrenzenden Gehäuseprofilabschnitte fluchtende Passöffnungen aufweisen, in die ein Passelement spielfrei kraftschlüssig eingesetzt, insbesondere eingepresst ist. In weiterer vorteilhafter Ausgestaltung ist hierbei jedes Passelement hülsenförmig mit einer Durchgangsöffnung für ein Befestigungselement, insbesondere für eine Schraube, ausgebildet. Hierdurch lässt sich das Passelement zusätzlich sichern, und das gesamte Gehäuse kann durch die Passelemente hindurch mit Befestigungsschrauben auf einer Montagefläche, insbesondere auf einer Gebäudewand, befestigt werden.

Anhand der Zeichnungen und darin veranschaulichter, bevorzugter Ausführungs- und Anwendungsbeispiele soll die Erfindung im Folgenden weitergehend erläutert werden. Es zeigen:
- Fig. 1: eine Perspektivansicht einer ersten Ausführungsform eines mit dem erfindungsgemäßen Bausystem aufgebauten Gehäuses,
- Fig. 2: den Teilbereich II aus Fig. 1 als vergrößerte perspektivische Explosionsdarstellung zur Erläuterung der wesentlichen Komponenten des erfindungsgemäßen Bausystems,
- Fig. 3: eine Ansicht analog zu Fig. 1 in einer alternativen Ausführung,
- Fig. 4: eine Ausschnittvergrößerung aus Fig.3 als perspektivische Explosionsdarstellung,
- Fig. 5: eine weitere Alternative analog zu Fig. 1 und 3,
- Fig. 6: eine Ansicht analog zu Fig. 4 zur Ausführungsform gemäß Fig. 5,
- Fig. 7: eine vergrößerte Perspektivansicht eines Eckverbinders nach der Erfindung,
- Fig. 8: den Eckverbinder gemäß Fig. 7 mit zusätzlichen Komponenten in montierter Anordnung,
- Fig. 9: die Komponenten gemäß Fig. 8 in einer perspektivischen Explosionsansicht,
- Fig. 10: eine perspektivische Teilansicht der Gehäuse-Ausführung gemäß Fig. 1,
- Fig. 11: eine Ansicht analog zu Fig. 10 mit einem zusätzlichen, in das Gehäuse eingesetzten Systemträger sowie mit Verriegelungsmitteln in einer Lösestellung,
- Fig. 12: eine Ansicht analog zu Fig. 11, jedoch in der Riegelstellung der Verriegelungsmittel,
- Fig. 13: eine weitere Darstellung analog zu Fig. 12 mit einem zusätzlichen Werkzeug zum Betätigen der Verriegelungsmittel,
- Fig. 14: eine Perspektivansicht eines ebenfalls mit dem erfindungsgemäßen Bausystem erstellten Gehäuses in einer Ausführung mit größerer Bautiefe,
- Fig. 15: einen Teilbereich des Gehäuses gemäß Fig. 14 in einer perspektivischen Explosionsansicht,
- Fig. 16: eine stark vergrößerte Perspektivansicht eines Abschnittes eines erfindungsgemäßen Gehäuseprofilabschnittes in einer Ausführung für ein Gehäuse gemäß Fig. 1 bis 13 mit geringerer Bautiefe,
- Fig. 17: eine Perspektivansicht eines Abschnittes eines erfindungsgemäßen Gehäuseprofilabschnittes für eine Gehäuseausführung gemäß Fig. 14 und 15 mit größerer Bautiefe,
- Fig. 18: ein weiteres Beispiel eines Gehäuses mit einer noch größeren Bautiefe,
- Fig. 19: einen Teilbereich aus Fig. 18 in perspektivischer Explosionsdarstellung und
- Fig. 20: eine weitere perspektivische Explosionsdarstellung ähnlich Fig. 19, jedoch aus einer anderen Blickrichtung.

In den verschiedenen Figuren der Zeichnung sind gleiche Teile stets mit den gleichen Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels sowie auch unabhängig von den Merkmalskombinationen und Rückbeziehungen der Ansprüche eine erfinderische Bedeutung haben.

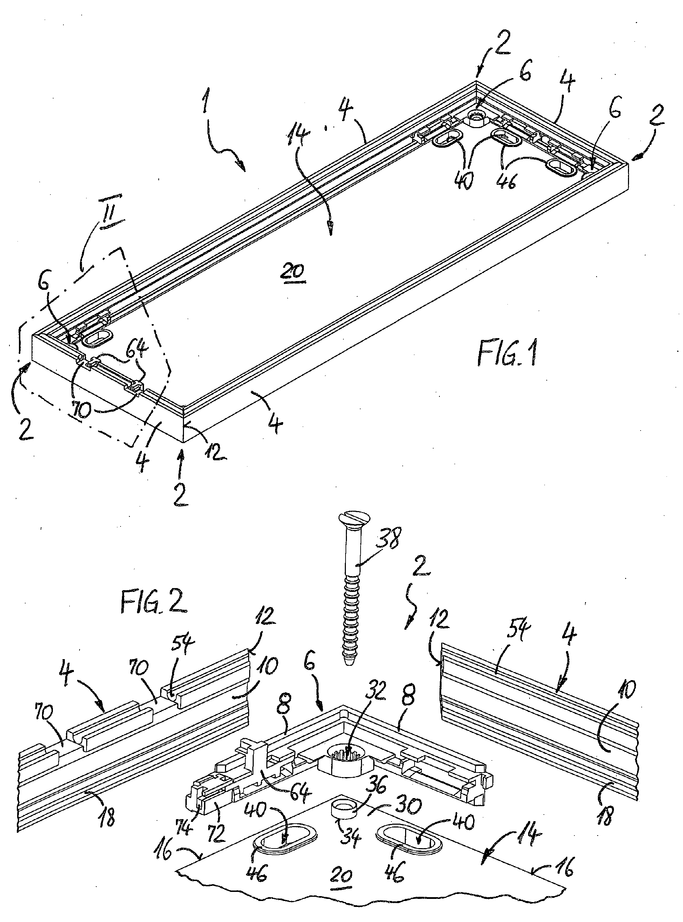

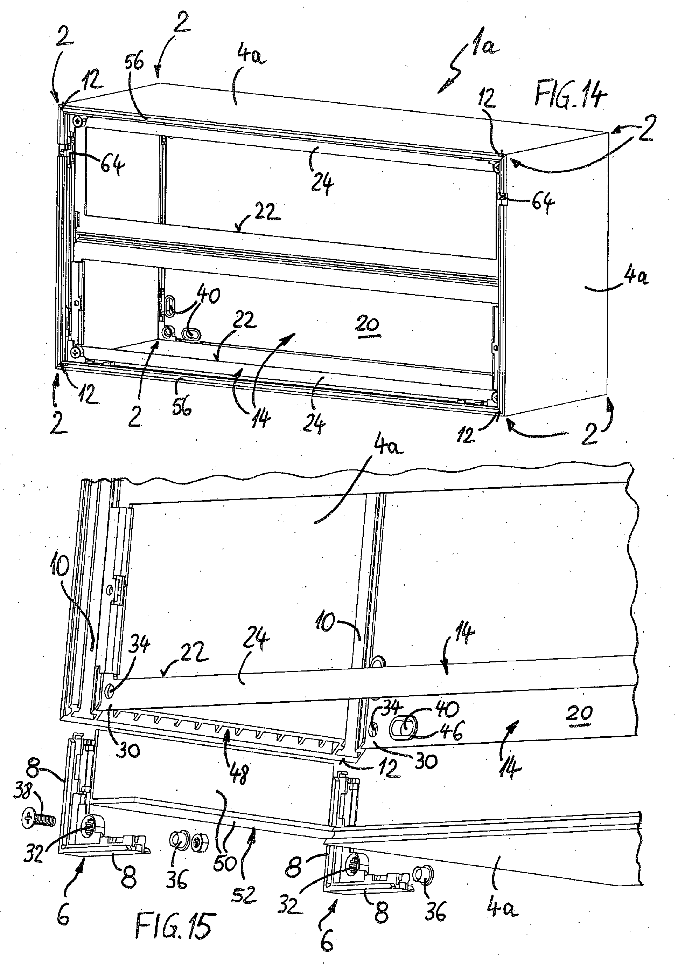

In den Zeichnungen sind einige Beispiele für verschiedene, mit dem erfindungsgemäßen Bausystem montierbare Gehäuse-Ausführungen veranschaulicht. In den Ausführungen gemäß Fig. 1 bis 6 und 10 bis 13 handelt es sich jeweils um ein relativ flaches Gehäuse 1 mit einer geringen Bautiefe. Gemäß Fig. 14, 15 und 18 bis 20 kann auch ein Gehäuse 1 a mit größerer Bautiefe mit dem erfindungsgemäßen Bausystem gebildet werden.

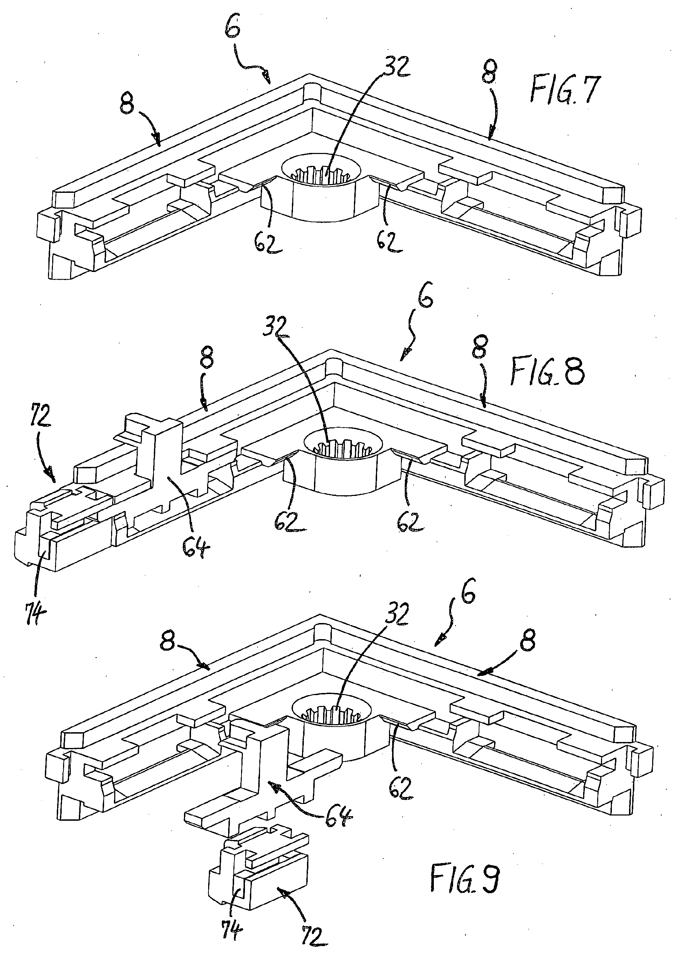

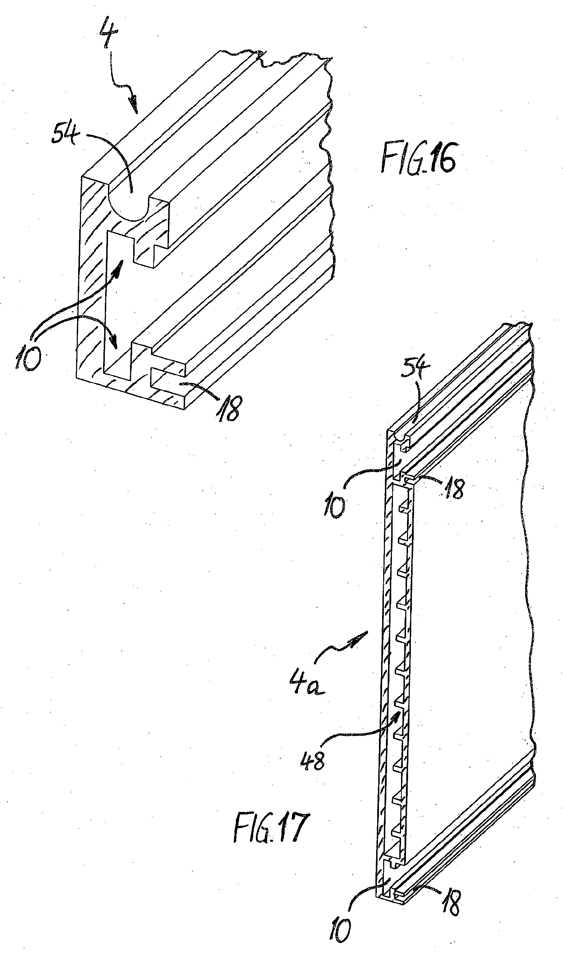

Jedes Gehäuse 1, 1a weist mehrere Gehäuseecken 2 auf. In jeder Gehäuseecke 2 sind zwei Gehäuseprofilabschnitte 4 bzw. 4a - vergleiche dazu auch die gesonderten Darstellungen in Fig. 16 und 17 - über einen Eckverbinder 6 zu verbinden. Dazu weist jeder Eckverbinder 6 - siehe dazu insbesondere Fig. 2 und die gesonderten Darstellungen in Fig. 7 bis 9 - zwei Winkelschenkel 8 auf, die jeweils axial, d. h. in Profil-Längsrichtung derart in Profilnuten 10 der Gehäuseprofilabschnitte 4, 4a einzuschieben sind, dass sie die Gehäuseprofilabschnitte 4, 4a in Profil-Querrichtung formschlüssig halten. Wie dargestellt sind dazu die Profilnuten 10 bevorzugt als T-Nuten ausgebildet, siehe auch Fig. 16 und 17. Hierbei sind die Profilnuten 10 mit ihren Öffnungen zu einer Profil-Innenseite hin angeordnet, die im montierten Zustand des Gehäuses in Richtung des von den Gehäuseprofilabschnitten umschlossenen Gehäuse-Innenraums weist. Jede Profilnut 10 erweitert sich ausgehend von ihrer schlitzförmigen Öffnung innerhalb des Profils mit einem etwa T-förmigen Nutquerschnitt. Die Winkelschenkel 8 jedes Eckverbinders 6 weisen einen daran angepassten, ebenfalls bevorzugt T-förmigen Querschnitt auf. Hierdurch kann der jeweilige Winkelschenkel 8 in Profil-Längsrichtung kraftschlüssig in die jeweilige Profilnut 10 eingeschoben werden. In Profil-Querrichtung ist aber der Gehäuseprofilabschnitt 4, 4a formschlüssig an dem Profilschenkel 8 gehalten.

Erfindungsgemäß ist nun vorgesehen, dass in jeder Gehäuseecke 2 die Gehäuseprofilabschnitte 4 bzw. 4a endseitig exakt auf Gehrung geschnitten sind und mit entsprechend schrägen Stirnflächen 12 bündig aneinander anliegen. Dadurch werden vorteilhafterweise die Eckverbinder 6 im Außenbereich der Gehäuseecken 2 vollständig in den Gehäuseprofilabschnitten 4, 4a aufgenommen und dadurch von der äußeren Sichtseite her abgedeckt.

Vorsorglich wird zu den Fig. 16 und 17 bemerkt, dass die dort dargestellten Profilabschnitte 4, 4a als Profil-Ausschnitte ohne die schrägen Gehrungs-Stirnflächen 12 dargestellt sind. Deshalb sind die vorderen Stirnflächen als Schnittflächen schraffiert dargestellt.

Erfindungsgemäß ist weiterhin vorgesehen, dass im montierten Zustand des jeweiligen Gehäuses die Eckverbinder 6 zumindest paarweise zur Aufnahme von jeweils zwischen den Gehäuseecken 2 in den jeweiligen Profil-Längsrichtungen und/oder diagonal wirkenden Zugkräften verbunden sind. Durch diese Verbindungen der Eckverbinder 6 werden die Gehäuseprofilabschnitte 4, 4a fest verspannt zusammengehalten.

In zweckmäßiger Ausgestaltung sind die Eckverbinder 6 über ein starres, formstabiles, aus einem Flachmaterial bestehendes und in einer von den Gehäuseprofilabschnitten 4, 4a umschlossenen Ebene liegendes Verbinderelement 14 verbunden. Vorzugsweise ist dieses Verbinderelement 14 zumindest bereichsweise mit Außenrändern 16 in zusätzlichen Profilnuten 18 der Gehäuseprofilabschnitte 4, 4a gehalten. Jede zusätzliche Profilnut 18 verläuft parallel zu der ersten, bevorzugt als T-Nut ausgebildeten Profilnut 10 ebenfalls auf der Profil-Innenseite, wobei die Profilnut 18 einen einfachen rechteckigen Nutquerschnitt aufweist, der so an die Dicke des Verbinderelementes 14 angepasst ist, dass letzteres mit seinem jeweiligen Außenrand 16 kraftschlüssig in die Profilnut 18 einsetzbar ist.

Für die konstruktive Ausgestaltung des Verbinderelementes 14 gibt es im Rahmen der vorliegenden Erfindung unterschiedliche Möglichkeiten.

Wie sich zunächst aus Fig. 1 und 2 ergibt, kann in bevorzugter Ausgestaltung das Verbinderelement 14 von einer im Wesentlichen - d. h. abgesehen von eventuellen, im Folgenden noch beschriebenen Durchführöffnungen für Befestigungselemente, elektrische Leitungen und/oder dergleichen - flächig geschlossenen Gehäusewand 20 gebildet sein. Diese Gehäusewand 20 kann insbesondere als Rückwand eine hintere bzw. untere Gehäuseseite verschließen. Vorteilhafterweise hat hierbei die Gehäusewand 20 eine Doppelfunktion; sie fungiert einerseits in üblicher Weise als Gehäusewand sowie andererseits auch als Verbinderelement 14 zur festen Verbindung der Eckverbinder 6 und dadurch zum sicheren Zusammenhalten der Gehäuseprofilabschnitte 4, 4a.

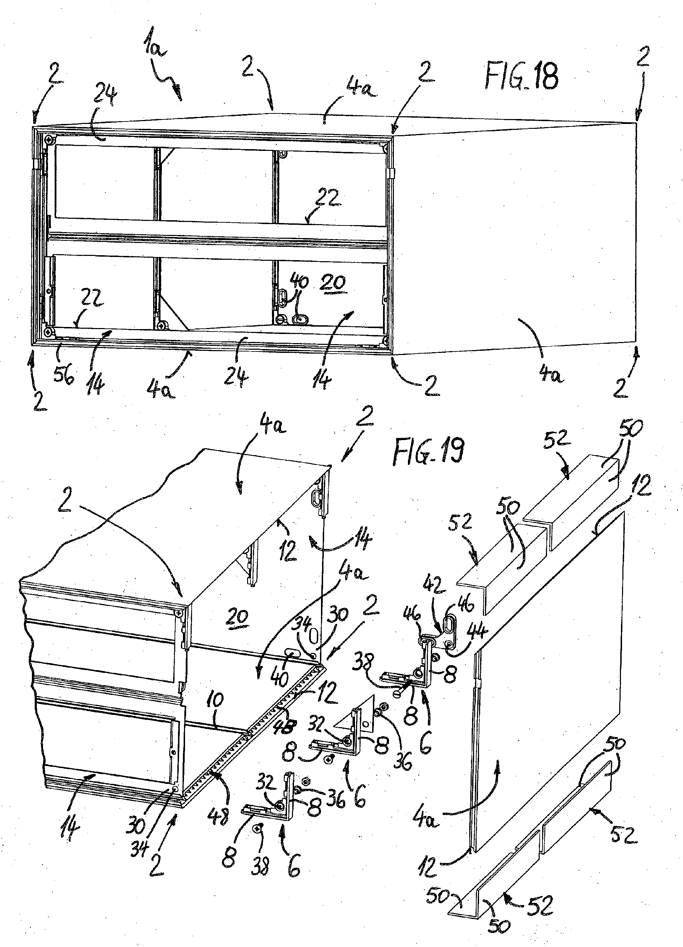

Zu der Ausführung des Verbinderelementes 14 als Gehäusewand 20, insbesondere Rückwand, wird auch auf die Ausführungen in Fig. 14 und 15 sowie in Fig. 18 bis 20 verwiesen.

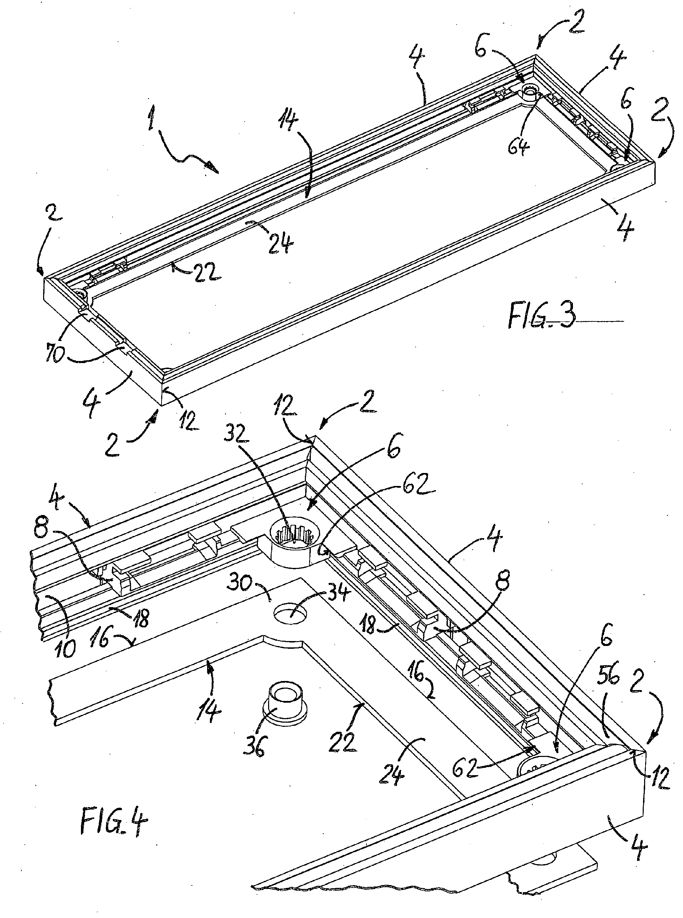

Gemäß Fig. 3 und 4 kann das Verbinderelement 14 auch als eine mindestens eine Rahmenöffnung 22 aufweisende Rahmenwand 24 ausgebildet sein. Hierzu wird auch auf die Ausführungen in Fig. 14 und 15 sowie in Fig. 18 bis 20 verwiesen.

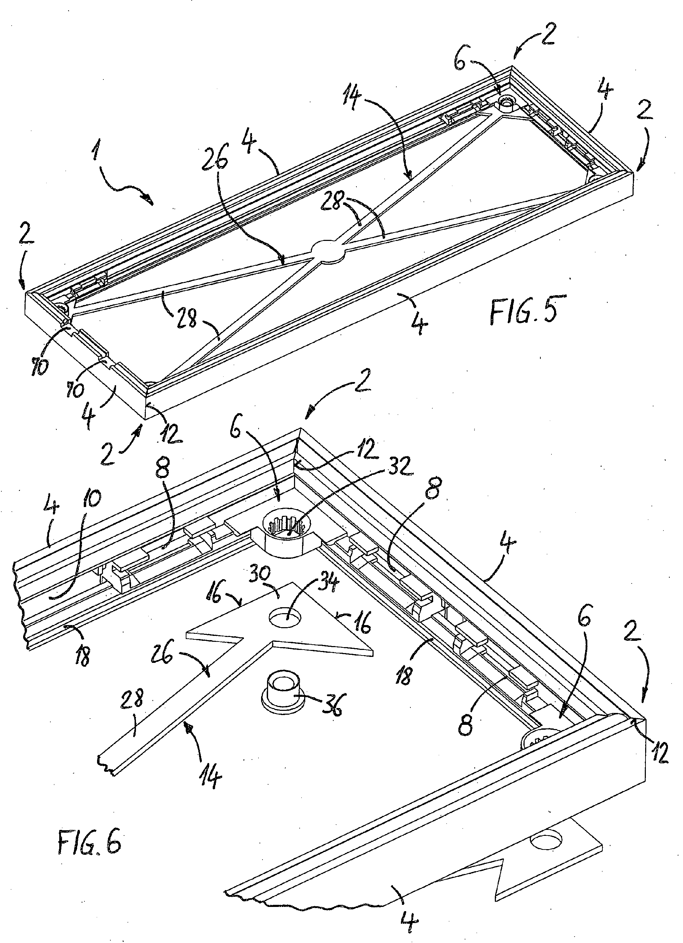

Was noch die in Fig. 5 und 6 veranschaulichte Alternative betrifft, so ist hierbei das Verbinderelement 14 als Diagonal-Kreuzverbinder 26 mit gekreuzten, die Eckverbinder 6 jeweils paarweise diagonal verbindenden Diagonalstreben 28 ausgebildet.

In allen Fällen weist das Verbinderelement 14 im inneren Bereich jeder Gehäuseecke 2 einen Eckenabschnitt 30 auf, der mit seinen Außenrändern 16 in den zusätzlichen Profilnuten 18 der Gehäuseprofilabschnitte 4, 4a sitzt und dadurch in einer zur Ebene des jeweiligen Eckverbinders 6 parallel versetzten Ebene liegt. Weiterhin ist hierbei vorgesehen, dass jeder Eckverbinder 6 im Bereich eines in seinem Innenwinkelbereich zwischen den Winkelschenkeln 8 gebildeten Ansatzes einerseits sowie der zugehörige Eckenabschnitt 30 des Verbinderelementes 14 andererseits im inneren Winkelbereich der angrenzenden Gehäuseprofilabschnitte 4, 4a senkrecht zur Ebene des Verbinderelementes 14 fluchtende Passöffnungen 32, 34 aufweisen, in die ein gemeinsames Passelement 36 spielfrei kraftschlüssig eingesetzt, insbesondere eingepresst ist. Hierzu wird insbesondere auf die Explosionsdarstellungen in Fig. 2, 4 und 6 sowie auch in Fig.15, 19 und 20 verwiesen.

In bevorzugter Ausgestaltung ist jedes Passelement 36 hülsenförmig mit einer Durchgangsöffnung für ein Befestigungselement, insbesondere für eine Schraube 38, siehe beispielsweise Fig. 2 und 15, ausgebildet.

Um einen guten Kraftschluss und damit einen festen, spielfreien Sitz des Passelementes 36 zu erreichen, kann insbesondere innerhalb der Passöffnung 32 des Eckverbinders 6 eine geeignete Profilierung, beispielsweise nach Art einer Rändelung oder Verzahnung, vorgesehen sein.

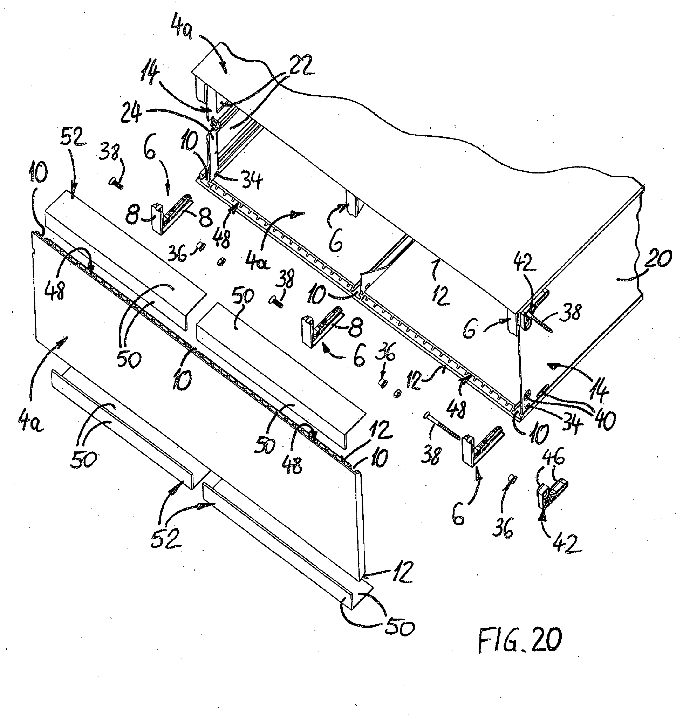

In weiterer bevorzugter Ausgestaltung kann die auch als Verbinderelement 14 fungierende Gehäusewand 20 mindestens eine Durchführöffnung 40 insbesondere für nicht dargestellte elektrische Leitungen aufweisen, wobei die Durchführöffnung 40 bevorzugt in der Nähe einer der Passöffnungen 32 angeordnet ist. Gemäß Fig. 1 können in jedem Gehäuse-Eckenbereich zwei Durchführöffnungen 40 zur Winkelhalbierenden symmetrisch benachbart zu der Passöffnung 32 angeordnet sein. Weiterhin ist bevorzugt in jedem Eckbereich der Rückseite der Gehäusewand 20 ein elastisches Anlageteil 42 (siehe insbesondere Fig. 19 und 20) zur Auflage auf einer Montagefläche, insbesondere einer Gebäudewand, angeordnet. Damit bildet das Anlageteil 42 eine Art Auflagefuß zur Montage des Gehäuses 1, 1a auf der jeweiligen Montagefläche. Indem jedes Anlageteil 42 aus einem gummielastischen Material besteht, wird über die in den Eckbereichen angeordneten Anlageteile 42 ein Ausgleich von Unebenheiten der Montagefläche, d. h. ein so genannter "Putzausgleich" erreicht. Zudem dienen die Anlageteile 42 auch als Abstandhalter, wodurch das Gehäuse mit einem bestimmten Wandabstand montiert wird, der im Falle einer Montage im Freien bzw. im Außenbereich von Gebäuden eine Regenwasserführung ermöglicht. Jedes Anlageteil 42 weist ein mit der Passöffnung 34 der Gehäusewand 20 fluchtendes Schraubenloch 44 auf (nur in Fig. 19 bezeichnet), so dass gemäß Fig. 2 und 19 die Befestigungsschraube 38 zur Wandbefestigung durchgeführt werden kann. In weiterer bevorzugter Ausgestaltung weist zudem jedes Anlageteil 42 für die/jede benachbarte Durchführöffnung 40 der Gehäusewand 20 einen Durchführabschnitt mit einem in die Durchführöffnung 40 eingreifenden Öffnungsrand 46 auf. In Fig. 1, 2, 12 und 13 sind jeweils nur die durch die Durchführöffnungen 40 greifenden Öffnungsränder 46 bezeichnet. In einem Auslieferungszustand können die von den Öffnungsrändern 46 umschlossenen Öffnungen des/jedes Anlageteils 42 jeweils mit einer dünnen, membranartigen Materialschicht geschlossen sein, wobei diese Materialschicht zur Durchführung von Leitungen durchstoßen oder entfernt werden kann.

Bei allen dargestellten Ausführungsbeispielen ist das jeweilige Gehäuse 1, 1 a rechteckig ausgebildet, wobei vier Gehäuseprofilabschnitte 4 bzw. 4a jeweils paarweise in den Gehäuseecken 2 rechtwinklig miteinander verbunden sind. Hierbei beträgt der Gehrungswinkel zwischen den jeweils angrenzenden Gehäuseprofilabschnitten 45°.

Bei den ersten Gehäuse-Ausführungen, wobei das Gehäuse 1 flach mit geringer Bautiefe ausgebildet ist, sind insgesamt vier Gehäuseprofilabschnitte 4 vorgesehen, die über insgesamt nur vier Eckverbinder 6 und das zugehörige Verbinderelement 14 verbunden sind. Die Bautiefe des Gehäuses 1 wird hierbei von der Profilbreite der Gehäuseprofilabschnitte 4 definiert.

Bei den Gehäuse-Ausführungen mit größerer Bautiefe gemäß Fig. 14 und 15 sowie gemäß Fig. 18 bis 20 ist vorgesehen, dass die hinsichtlich ihrer Profilbreite - vgl. auch Fig. 17 - der Gehäuse-Bautiefe etwa entsprechenden, wandungsartigen Gehäuseprofilabschnitte 4a in zwei gegenüberliegenden Profilrandbereichen jeweils eine gleichartige Profilnut 10 zur Verbindung über zweimal vier Eckverbinder 6 mit je einem zugehörigen Verbinderelement 14 aufweisen. Für eine Ausgestaltung des Gehäuses 4a mit einer besonders großen Bautiefe - siehe dazu Fig. 18 bis 20 - kann jeder Gehäuseprofilabschnitt 4a in seinem zwischen den gegenüberliegenden randlichen Profilnuten 10 liegenden Flächenbereich mindestens eine zusätzliche entsprechende parallele Profilnut 10 zur Zwischenverbindung der Gehäuseprofilabschnitte 4a über zusätzliche Eckverbinder 6 aufweisen.

Weiterhin kann für das Gehäuse 1 a mit größerer Bautiefe in weiterer vorteilhafter Ausgestaltung vorgesehen sein, dass die Gehäuseprofilabschnitte 4a in zwischen den jeweiligen Profilnuten 10 liegenden Bereichen ihrer schrägen Stirnflächen 12 jeweils einen schlitzartigen Profil-Hohlraum 48 zur Aufnahme eines einzusteckenden Schenkels 50 eines zusätzlichen Winkelprofils 52 aufweisen. Durch Einsetzen der Winkelprofile 52 wird ein zusätzlicher Verschluss des Gehäuses im Bereich der Gehrungsspalte erreicht.

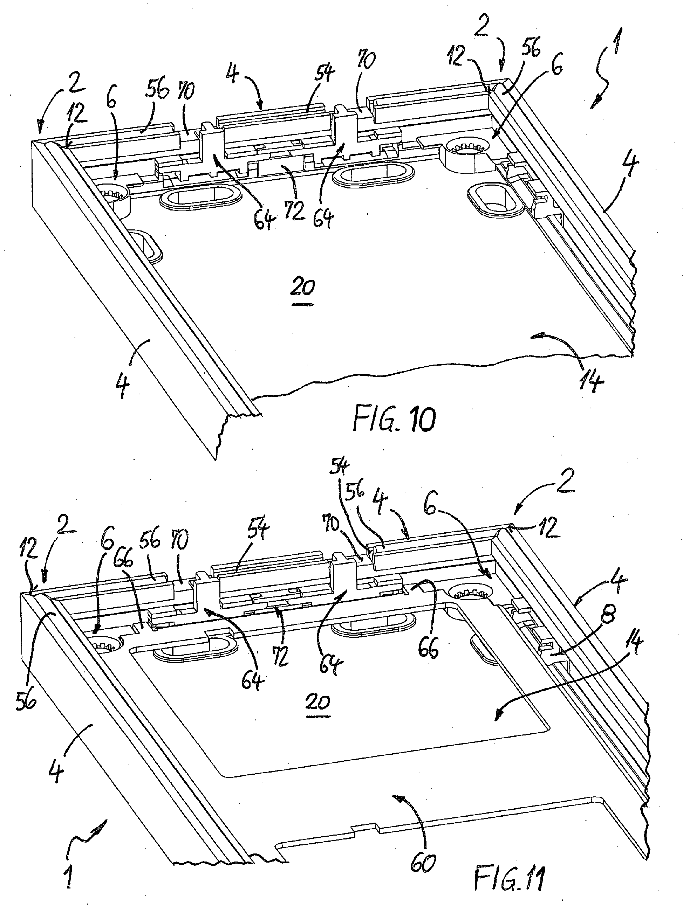

Der Vollständigkeit halber sei noch erwähnt, dass die Gehäuseprofilabschnitte 4, 4a auf einer Profil-Oberseite eine rillenartige Profilnut 54 (siehe insbesondere Fig. 16 und 17) zur Aufnahme einer Dichtung 56 aufweisen, die von einer Rundschnurdichtung gebildet ist und daher wulstartig vorsteht. Hierzu wird beispielsweise auf Fig. 10 und 11 verwiesen. Die Dichtung 56 dient zur Auflage mindestens eines nicht dargestellten vorderen Abdeckteils bzw. einer Gehäuse-Vorderwand.

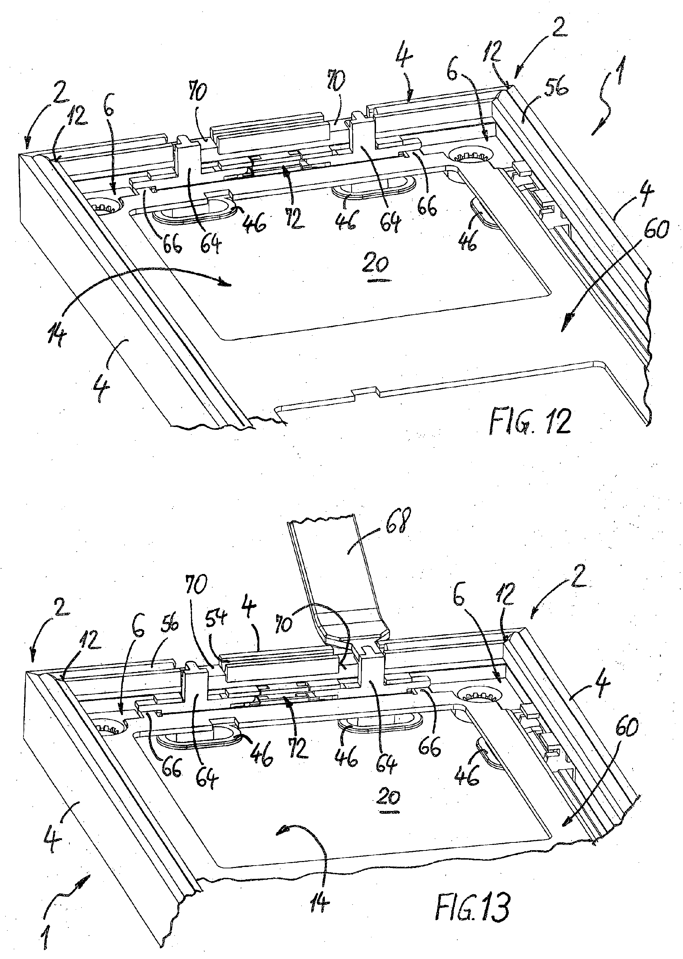

Zur Montage des Gehäuses 1 bzw. 1a werden zunächst drei Gehäuseprofilabschnitte 4 bzw. 4a U-förmig über zwei Eckverbinder 6 miteinander verbunden. In diesen U-förmigen, auf einer Seite noch offenen Rahmen wird dann das/jedes Verbinderelement 14 in die zusätzlichen Profilnuten 18 eingeschoben. In den letzten, verbleibenden Gehäuseprofilabschnitt 4, 4a werden endseitig die Eckverbinder 6 mit jeweils einem Winkelschenkel 8 eingesteckt. Dieser Gehäuseprofilabschnitt wird dann mit den beiden anderen Winkelschenkeln 8 der Eckverbinder 6 in die freien Enden der zwei Profile des U-Rahmens eingesteckt. Hierbei übergreift der letzte Profilabschnitt mit seiner Profilnut 18 den Außenrand 16 des Verbinderelementes 14. Abschließend brauchen dann nur noch die Passelemente 36 in die jeweils fluchtenden Passöffnungen 32, 34 eingesetzt zu werden. Bei Bedarf ist umgekehrt auch eine Demontage möglich. Zudem kann ein Gehäuse auch problemlos mehrfach montiert, demontiert und wiedermontiert werden. Anhand der Fig. 10 bis 13 wird eine weitere vorteilhafte Ausgestaltung der Erfindung erläutert, die allerdings auch unabhängig vom Gegenstand des Anspruchs 1 vorgesehen sein kann. Demnach weisen die Eckverbinder 6 Haltemittel für einen rahmenartigen, in einen von den Gehäuseprofilabschnitten 4, 4a umschlossenen Aufnahmebereich einsetzbaren Systemträger 60 auf. Bei diesem Systemträger 60 handelt es sich um eine rahmenartige Halteplatte zur Aufnahme bzw. Halterung von nicht dargestellten Gerätekomponenten. Als Haltemittel ist einerseits vorgesehen, dass zumindest eine Teilmenge der Eckverbinder 6 mit Haltekonturen 62 derart ausgebildet sind, dass der Systemträger 60 mit einem Seitenrand durch Unterstecken der Haltekonturen 62 fixierbar ist. Die Haltekonturen 62 sind am besten in den Fig. 7 bis 9 erkennbar. Demnach handelt es sich um Haltestege mit schrägen Einführkanten, unter die der Systemträger 60 mit seinem Seitenrand eingesetzt werden kann. Bevorzugt wird ein schmaler Seitenrand auf diese Weise fixiert. Zur Fixierung des gegenüberliegenden Seitenrandes des Systemträgers 60 ist andererseits vorgesehen, dass an mindestens einem der Eckverbinder 6 ein Riegelschieber 64 derart verschiebbar geführt ist, dass in einer Lösestellung des Riegelschiebers 64 der Systemträger 60 mit mindestens einem randlichen Halteansatz 66 in den Aufnahmebereich des Gehäuses 1, 1 a einsetzbar - und umgekehrt entsprechend entnehmbar - ist und der Riegelschieber 64 in einer Riegelstellung den Halteansatz 66 des Systemträgers 60 übergreift und hierdurch gegen Lösen verriegelt. Die Lösestellung ist in Fig. 11 veranschaulicht, während die Riegelstellung in den Fig. 12 und 13 dargestellt ist. Vorzugsweise sind im Bereich eines der Gehäuseprofilabschnitte 4 zwei Riegelschieber 64 an jeweils einem der zwei zugehörigen Eckverbinder 6 parallel zu dem Gehäuseprofilabschnitt 4 verschiebbar geführt. In weiterer vorteilhafter Ausgestaltung weisen hierbei die Riegelschieber 64 derart gegensinnige Löse- und Riegelstellungen auf, dass ihre Riegelstellung durch Verschiebung voneinander weg nach außen und ihre Lösestellung durch Verschiebung aufeinander zu nach innen erreicht werden. Dies lässt sich anhand der Darstellungen in Fig. 11 und 12 leicht nachvollziehen. Gemäß Fig. 13 ist jeder Riegelschieber 64 mittels eines Werkzeuges 68 manuell verschiebbar, wobei der Gehäuseprofilabschnitt 4 jeweils eine Ausnehmung 70 zur Bildung einer Einführöffnung für das Werkzeug 68 aufweist.

In weiterer vorteilhafter Ausgestaltung dieser Verriegelung kann vorgesehen sein, dass jeder Riegelschieber 64 in seiner Riegelstellung insbesondere elektromagnetisch gegen ein Verschieben in die Lösestellung blockierbar ist. Hierdurch kann vorteilhafterweise ein unberechtigtes Entriegeln der Riegelschieber 64 ausgeschlossen werden. Ein Entriegeln ist erst möglich, wenn durch Aufhebung der insbesondere elektromagnetischen Blockierung die Riegelschieber 64 zum Verschieben freigegeben werden.

Für diese Blockierung der Riegelschieber 64 kann mit Vorteil ein Elektro-Blockierelement 72 vorgesehen sein, siehe dazu insbesondere Fig. 8 und 9. Dieses Blockierelement 72 ist bei den bevorzugten Ausführungen im Bereich zwischen den Riegelschiebern 64 mit den benachbarten Eckverbindem 6 verbunden, insbesondere formschlüssig eingehakt, siehe Fig. 8. Das Blockierelement 72 weist ein elektromagnetisch bewegbares Sperrelement 74 auf, welches aus einer die Verschiebung des Riegelschiebers 64 in seine Lösestellung ermöglichenden Lage - siehe Fig. 8 - in eine im Bewegungsbereich des Riegelschiebers 64 liegende Sperrlage bewegbar ist. Mit Vorteil handelt es sich bei dem Blockierelement 72 um ein bistabiles Magnetelement, wobei beide Stellungen jeweils stabil sind, so dass der Elektromagnet nur zum Umschalten jeweils kurzzeitig elektrisch angesteuert werden muss.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im jeweiligen unabhängigen Anspruch definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des jeweiligen unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

## Patentansprüche

1. Bausystem für Gehäuse (1, 1a), insbesondere für elektrische Geräte, wobei in jeder von mehreren Gehäuseecken (2) zwei Gehäuseprofilabschnitte (4, 4a) über einen Eckverbinder (6) verbunden sind, wobei jeder Eckverbinder (6) zwei Winkelschenkel (8) aufweist, die jeweils axial, in Profil-Längsrichtung derart in Profilnuten (10) der Gehäuseprofilabschnitte (4, 4a) eingeschoben sind, dass sie die Gehäuseprofilabschnitte (4, 4a) in Profil-Querrichtung formschlüssig halten,
**dadurch gekennzeichnet, dass** in jeder Gehäuseecke (2) die Gehäuseprofilabschnitte (4, 4a) endseitig auf Gehrung geschnitten sind und mit entsprechend schrägen Stirnflächen (12) unter äußerer Abdeckung des Eckverbinders (6) aneinander anliegen, wobei die Eckverbinder (6) zur Aufnahme von jeweils zwischen den Gehäuseecken (2) in den jeweiligen Profil-Längsrichtungen und/oder diagonal wirkenden Zugkräften verbunden sind.

2. Bausystem nach Anspruch 1,
**dadurch gekennzeichnet, dass** die Eckverbinder (6) über ein starres, formstabiles, aus einem Flachmaterial bestehendes und in einer von den Gehäuseprofilabschnitten (4, 4a) umschlossenen Ebene liegendes Verbinderelement (14) verbunden sind, wobei das Verbinderelement (14) vorzugsweise mit Außenrändern (16) in zusätzlichen Profilnuten (18) der Gehäuseprofilabschnitte (4, 4a) gehalten ist.

3. Bausystem nach Anspruch 2,
**dadurch gekennzeichnet, dass** das Verbinderelement (14) als eine im Wesentlichen flächig geschlossene Gehäusewand (20) ausgebildet ist.

4. Bausystem nach Anspruch 2,
**dadurch gekennzeichnet, dass** das Verbinderelement (14) als eine mindestens eine Rahmenöffnung (22) aufweisende Rahmenwand (24) ausgebildet ist.

5. Bausystem nach Anspruch 2,
**dadurch gekennzeichnet, dass** das Verbinderelement (14) als Diagonal-Kreuzverbinder (26) ausgebildet ist.

6. Bausystem nach einem der Ansprüche 2 bis 5,
**dadurch gekennzeichnet, dass** das Verbinderelement (14) im Bereich jeder Gehäuseecke (2) einen Eckenabschnitt (30) aufweist, der in einer zur Ebene des jeweiligen Eckverbinders (6) parallel versetzten Ebene liegt, wobei jeder Eckverbinder (6) und der zugehörige Eckenabschnitt (30) des Verbinderelementes (14) im inneren Winkelbereich der angrenzenden Gehäuseprofilabschnitte (4, 4a) fluchtende Passöffnungen (32, 34) aufweisen, in die ein Passelement (36) spielfrei eingesetzt ist.

7. Bausystem nach Anspruch 6,
**dadurch gekennzeichnet, dass** jedes Passelement (36) hülsenförmig mit einer Durchgangsöffnung für ein Befestigungselement, insbesondere für eine Schraube (38) ausgebildet ist.

8. Bausystem nach Anspruch 3 und nach Anspruch 6 oder 7,
**dadurch gekennzeichnet, dass** die Gehäusewand (20) mindestens eine Durchführöffnung (40) aufweist, die bevorzugt in der Nähe einer der Passöffnungen (32) angeordnet ist.

9. Bausystem nach Anspruch 8,
**dadurch gekennzeichnet, dass** in jedem Eckbereich der Rückseite der Gehäusewand (20) ein elastisches Anlageteil (42) zur Auflage auf einer Montagefläche angeordnet ist, wobei jedes Anlageteil (42) ein mit der Passöffnung (34) fluchtendes Schraubenloch (44) und bevorzugt für die/jede benachbarte Durchführöffnung (40) einen Durchführabschnitt mit einem in die Durchführöffnung (40) eingreifenden Öffnungsrand (46) aufweist.

10. Bausystem nach einem der Ansprüche 1 bis 9,
**gekennzeichnet durch** eine rechteckige Gehäuse-Ausführung, wobei vier Gehäuseprofilabschnitte (4, 4a) jeweils paarweise rechtwinklig in den Gehäuseecken (2) miteinander verbunden sind.

11. Bausystem nach einem der Ansprüche 1 bis 10,
**dadurch gekennzeichnet, dass** das Gehäuse vier Gehäuseprofilabschnitte (4) aufweist, die über insgesamt vier Eckverbinder (6) und das zugehörige Verbinderelement (14) verbunden sind.

12. Bausystem nach einem der Ansprüche 1 bis 10,
**dadurch gekennzeichnet, dass** das Gehäuse (1) vier wandungsartige Gehäuseprofilabschnitte (4a) aufweist, die in zwei gegenüberliegenden Profilrandbereichen jeweils eine gleichartige Profilnut (10) zur Verbindung über zweimal vier Eckverbinder (6) mit je einem zugehörigen Verbinderelement (14) aufweisen.

13. Bausystem nach Anspruch 12,
**dadurch gekennzeichnet, dass** jeder Gehäuseprofilabschnitt (4a) in seinem zwischen den gegenüberliegenden randlichen Profilnuten (10) liegenden Flächenbereich mindestens eine zusätzliche entsprechende Profilnut (10) zur Zwischenverbindung der Gehäuseprofilabschnitte (4a) über zusätzliche Eckverbinder (6) aufweist.

14. Bausystem nach Anspruch 12 oder 13,
**dadurch gekennzeichnet, dass** die Gehäuseprofilabschnitte (4a) in zwischen den Profilnuten (10) liegenden Bereichen ihrer schrägen Stirnflächen (12) jeweils einen schlitzartigen Profil-Hohlraum (48) zur Aufnahme eines einzusteckenden Schenkels (50) eines zusätzlichen Winkelprofils (52) aufweisen. aufweisen.

15. Bausystem insbesondere nach einem der Ansprüche 1 bis 14,
**dadurch gekennzeichnet, dass** die Eckverbinder (6) Haltemittel für einen rahmenartigen, in einen von den Gehäuseprofilabschnitten (4, 4a) umschlossenen Aufnahmebereich einsetzbaren Systemträger (60) aufweisen.

16. Bausystem nach Anspruch 15,
**dadurch gekennzeichnet, dass** zumindest eine Teilmenge der Eckverbinder (6) mit Haltekonturen (62) derart ausgebildet sind, dass der Systemträger (60) mit einem Seitenrand durch Unterstecken der Haltekonturen (62) fixierbar ist.

17. Bausystem nach Anspruch 15 oder 16,
**dadurch gekennzeichnet, dass** an mindestens einem der Eckverbinder (6) ein Riegelschieber (64) derart verschiebbar geführt ist, dass in einer Lösestellung des Riegelschiebers (64) der Systemträger (60) mit mindestens einem randlichen Halteansatz (66) in den Aufnahmebereich des Gehäuses (1, 1a) einsetzbar ist und der Riegelschieber (64) in einer Riegelstellung den Halteansatz (66) des Systemträgers (60) übergreift.

18. Bausystem nach Anspruch 17,
**dadurch gekennzeichnet, dass** im Bereich eines der Gehäuseprofilabschnitte (4) zwei Riegelschieber (64) an jeweils einem der zwei zugehörigen Eckverbinder (6) parallel zu dem Gehäuseprofilabschnitt (4) verschiebbar geführt sind, wobei vorzugsweise die Riegelschieber (64) derart gegensinnige Löse- und Riegelstellungen aufweisen, dass ihre Riegelstellung durch Verschiebung voneinander weg nach außen und ihre Lösestellung durch Verschiebung aufeinander zu nach innen erreicht werden.

19. Bausystem nach Anspruch 17 oder 18,
**dadurch gekennzeichnet, dass** der/jeder Riegelschieber (64) mittels eines Werkzeugs (68) manuell verschiebbar ist, wobei der Gehäuseprofilabschnitt (4) jeweils eine Ausnehmung (70) zur Bildung einer Einführöffnung für das Werkzeug (68) aufweist.

20. Bausystem nach einem der Ansprüche 17 bis 19,
**dadurch gekennzeichnet, dass** der/jeder Riegelschieber (64) in seiner Riegelstellung insbesondere elektromagnetisch gegen ein Verschieben in die Lösestellung blockierbar ist.

## Claims

1. Construction system for housings (1, 1a), in particular for electrical devices, wherein two housing profile sections (4, 4a) are connected via a corner connector (6) in each of a plurality of housing corners (2), wherein each corner connector (6) has two angle legs (8) which are in each case inserted axially in the profile longitudinal direction into profile groovers (10) of the housing profile sections (4, 4a) in such a way that they positively hold the housing profile sections (4, 4a) in the profile transverse direction,
**characterized in that** in each housing corner (2) the housing profile sections (4, 4a) are mitre-cut at the ends and bear against one another by correspondingly oblique end faces (12) while outwardly covering the corner connector (6), wherein the corner connectors (6) are connected to absorb tensile forces acting in each case between the housing corners (2) in the respective profile longitudinal directions and/or diagonally.

2. Construction system according to Claim 1,
**characterized in that** the corner connectors (6) are connected via a rigid, dimensionally stable connector element (14) consisting of a flat material and lying in a plane enclosed by the housing profile sections (4, 4a), wherein the connector element (14) is preferably held by outside edges (16) in additional profile groovers (18) of the housing profile sections (4, 4a).

3. Construction system according to Claim 2,
**characterized in that** the connector element (14) is designed as a substantially superficially, closed housing wall (20).

4. Construction system according to Claim 2,
**characterized in that** the connector element (14) is designed as a frame wall (24) having at least one frame opening (22).

5. Construction system according to Claim 2,
**characterized in that** the connector element (14) is designed as a diagonal cross connector (26).

6. Construction system according to one of Claims 2 to 5,
**characterized in that** the connector element (14) has in the region of each housing corner (2) a corner section (30) which lies in a plane offset parallel to the plane of the respective corner connector (6), wherein each corner connector (6) and the associated corner section (30) of the connector element (14) have aligned fitting openings (32, 34) in the inner angle region of the adjacent housing profile sections (4, 4a), into which openings a fitting element (36) is inserted in a play-free manner.

7. Construction system according to Claim 6,
**characterized in that** each fitting element (36) is designed to be sleeve-shaped with a through-opening for a fastening element, in particular for a screw (38).

8. Construction system according to Claim 3 and according to Claim 6 or 7,
**characterized in that** the housing wall (20) has at least one lead-through opening (40) which is preferably arranged in the vicinity of one of the fitting openings (32).

9. Construction system according to Claim 8,
**characterized in that** an elastic bearing part (42) for bearing on a mounting surface is arranged in each corner region of the rear side of the housing wall (20), wherein each bearing part (42) has a screw hole (44) aligned with the fitting opening (34) and, preferably for the/each adjacent lead-through opening (40), a lead-through section with an opening edge (46) engaging in the lead-through opening (40).

10. Construction system according to one of Claims 1 to 9,
**characterized by** a rectangular housing design, wherein four housing profile sections (4, 4a) are in each case connected to one another in pairs at right angles in the housing corners (2).

11. Construction system according to one of Claims 1 to 10,
**characterized in that** the housing has four housing profile sections (4) which are connected via a total of four corner connectors (6) and the associated connector element (14).

12. Construction system according to one of Claims 1 to 10,
**characterized in that** the housing (1) has four wall-like housing profile sections (4a) which have, in two opposite profile edge regions, in each case an identical profile groove (10) for connection via two times four corner connectors (6) to in each case an associated connector element (14).

13. Construction system according to Claim 12,
**characterized in that** each housing profile section (4a) has, in its surface region situated between the opposite marginal profile grooves (10), at least one additional corresponding profile groove (10) for the intermediate connection of the housing profile sections (4a) via additional corner connectors (6).

14. Construction system according to Claim 12 or 13,
**characterized in that** the housing profile sections (4a) have, in regions of their oblique end faces (12) that are situated between the profile grooves (10), in each case a slot-like profile cavity (48) for receiving a leg (50), which is to be inserted, of an additional angle profile (52).

15. Construction system in particular according to one of Claims 1 to 14,
**characterized in that** the corner connectors (6) have holding means for a frame-like system carrier (60) which can be inserted into a receiving region enclosed by the housing profile sections (4, 4a).

16. Construction system according to Claim 15,
**characterized in that** at least some of the corner connectors (6) are designed with holding contours (62) in such a way that the system carrier (60) can be fixed by a side edge by means of the holding contours (62) engaging from below.

17. Construction system according to Claim 15 or 16,
**characterized in that** a bolt slide (64) is displaceably guided on at least one of the corner connectors (6) in such a way that, in a release position of the bolt slide (64), the system carrier (60) can be inserted by at least one marginal holding lug (66) into the receiving region of the housing (1, 1a) and, in a locking position, the bolt slide (64) engages over the holding lug (66) of the system carrier (60).

18. Construction system according to Claim 17,
**characterized in that**, in the region of one of the housing profile sections (4), two bolt slides (64) are displaceably guided on in each case one of the two associated corner connectors (6) parallel to the housing profile section (4), wherein the bolt slides (64) preferably have oppositely directed release and locking positions in such a way that their locking position is achieved by displacing them outwardly away from one another and their release position is achieved by displacing them inwardly towards one another.

19. Construction system according to Claim 17 or 18,
**characterized in that** the/each bolt slide (64) can be displaced manually by means of a tool (68), wherein the housing profile section (4) in each case has a recess (70) for forming an insertion opening for the tool (68).

20. Construction system according to one of Claims 17 to 19,
**characterized in that** the/each bolt slide (64) can be blocked, in particular electromagnetically, in its locking position against displacement into the release position.

## Revendications

1. Système de construction de boîtier (1, 1a), en particulier pour appareils électriques, dans lequel, dans chacun de plusieurs coins du boîtier (2), deux portions profilées de boîtier (4, 4a) sont connectées par le biais d'un joint d'angle (6), chaque joint d'angle (6) présentant deux branches angulaires (8) qui sont chacune enfoncées axialement, dans la direction longitudinale du profilé, dans des rainures profilées (10) des portions profilées de boîtier (4, 4a) de telle sorte qu'elles retiennent par engagement par correspondance de formes les portions profilées de boîtier (4, 4a) dans la direction transversale du profilé,
**caractérisé en ce que** dans chaque coin du boîtier (2), les portions profilées de boîtier (4, 4a) sont coupées à onglet du côté de l'extrémité et s'appliquent l'une contre l'autre par des faces frontales (12) obliques de manière correspondante avec recouvrement extérieur du joint d'angle (6), les joints d'angle (6) étant connectés de manière à recevoir chaque fois des forces de traction agissant entre les coins du boîtier (2) en diagonale et/ou dans les directions longitudinales respectives du profilé.

2. Système de construction selon la revendication 1,
**caractérisé en ce que** les joints d'angle (6) sont connectés par le biais d'un élément de connexion (14) rigide, de forme stable, constitué d'un matériau plat et situé dans un plan formé par les portions profilées de boîtier (4, 4a), l'élément de connexion (14) étant de préférence retenu avec des bords extérieurs (16) dans des rainures profilées supplémentaires (18) des portions profilées de boîtier (4, 4a).

3. Système de construction selon la revendication 2,
**caractérisé en ce que** l'élément de connexion (14) est réalisé sous la forme d'une paroi de boîtier (20) essentiellement fermée à plat.

4. Système de construction selon la revendication 2,
**caractérisé en ce que** l'élément de connexion (14) est réalisé sous la forme d'une paroi de cadre (24) présentant au moins une ouverture de cadre (22).

5. Système de construction selon la revendication 2,
**caractérisé en ce que** l'élément de connexion (14) est réalisé sous la forme d'un connecteur croisé diagonal (26).

6. Système de construction selon l'une quelconque des revendications 2 à 5,
**caractérisé en ce que** l'élément de connexion (14) présente, dans la région de chaque coin du boîtier (2), une portion de coin (30) qui est située dans un plan décalé parallèlement par rapport au plan du joint d'angle respectif (6), chaque joint d'angle (6) et la portion de coin associée (30) de l'élément de connexion (14) présentant, dans la région coudée intérieure des portions profilées de boîtier adjacentes (4, 4a), des ouvertures d'ajustement en affleurement (32, 34), dans lesquelles est inséré sans jeu un élément d'ajustement (36).

7. Système de construction selon la revendication 6,
**caractérisé en ce que** chaque élément d'ajustement (36) est réalisé en forme de douille avec une ouverture de passage pour un élément de fixation, en particulier pour une vis (38).

8. Système de construction selon la revendication 3 et selon la revendication 6 ou 7, **caractérisé en ce que** la paroi de boîtier (20) présente au moins une ouverture de passage (40) qui est disposée de préférence à proximité de l'une des ouvertures d'ajustement (32).

9. Système de construction selon la revendication 8,
**caractérisé en ce que** dans chaque région de coin du côté arrière de la paroi de boîtier (20) est disposée une partie d'appui élastique (42) pour l'appui sur une surface de montage, chaque partie d'appui (42) présentant un trou de vis (44) en affleurement avec l'ouverture d'ajustement (34) et de préférence pour la/chaque ouverture de passage adjacente (40), une portion de passage avec un bord d'ouverture (46) s'engageant dans l'ouverture de passage (40).

10. Système de construction selon l'une quelconque des revendications 1 à 9,
**caractérisé par** une réalisation du boîtier rectangulaire, quatre portions profilées de boîtier (4, 4a) étant à chaque fois connectées les unes aux autres par paires à angle droit dans les coins du boîtier (2).

11. Système de construction selon l'une quelconque des revendications 1 à 10,
**caractérisé en ce que** le boîtier présente quatre portions profilées de boîtier (4) qui sont connectées par le biais d'une totalité de quatre joints d'angle (6) et par l'élément de connexion associé (14).

12. Système de construction selon l'une quelconque des revendications 1 à 10,
**caractérisé en ce que** le boîtier (1) présente quatre portions profilées de boîtier de type paroi (4a) qui présentent, dans deux régions de bord profilées opposées, à chaque fois une rainure profilée de même type (10) pour la connexion par le biais de deux fois quatre joints d'angle (6) avec à chaque fois un élément de connexion associé (14).

13. Système de construction selon la revendication 12,
**caractérisé en ce que** chaque portion profilée de boîtier (4a) présente, dans sa région de surface située entre les rainures profilées de bord opposées (10), au moins une rainure profilée correspondante supplémentaire (10) pour la connexion intermédiaire des portions profilées de boîtier (4a) par le biais de joints d'angle supplémentaires (6).

14. Système de construction selon la revendication 12 ou 13,
**caractérisé en ce que** les portions profilées de boîtier (4a) présentent, dans des régions situées entre les rainures profilées (10) de leurs surfaces frontales obliques (12), à chaque fois une cavité profilée de type fente (48) pour recevoir une branche à enficher (50) d'un profilé coudé supplémentaire (52).

15. Système de construction, en particulier selon l'une quelconque des revendications 1 à 14,
**caractérisé en ce que** les joints d'angle (6) présentent des moyens de retenue pour un support de système (60) de type cadre, pouvant être inséré dans une région de réception formée par les portions profilées de boîtier (4, 4a).

16. Système de construction selon la revendication 15,
**caractérisé en ce qu'**au moins une quantité partielle des joints d'angle (6) est réalisée avec des contours de retenue (62) de telle sorte que le support de système (60) puisse être fixé avec un bord latéral par enfichage par le dessous des contours de retenue (62).

17. Système de construction selon la revendication 15 ou 16,
**caractérisé en ce qu'**au niveau d'au moins l'un des joints d'angle (6), un coulisseau de verrouillage (64) est guidé de manière déplaçable de telle sorte que dans une position de libération du coulisseau de verrouillage (64), le support de système (60) puisse être inséré avec au moins une saillie de retenue marginale (66) dans la région de réception du boîtier (1, la) et que le coulisseau de verrouillage (64) vienne en prise par le dessus avec la saillie de retenue (66) du support de système (60) dans une position de verrouillage.

18. Système de construction selon la revendication 17,
**caractérisé en ce que** dans la région de l'une des portions profilées de boîtier (4), deux coulisseaux de verrouillage (64) sont guidés de manière déplaçable au niveau de l'un respectif des deux joints d'angle associés (6) parallèlement à la portion profilée de boîtier (4), les coulisseaux de verrouillage (64) présentant de préférence des positions de libération et de verrouillage de sens opposé de telle sorte que leur position de verrouillage soit atteinte par déplacement à l'écart l'un de l'autre vers l'extérieur et que leur position de libération soit atteinte par déplacement l'un vers l'autre vers l'intérieur.

19. Système de construction selon la revendication 17 ou 18,
**caractérisé en ce que** le/chaque coulisseau de verrouillage (64) peut être déplacé manuellement au moyen d'un outil (68), la portion profilée de boîtier (4) présentant chaque fois un évidement (70) pour former une ouverture d'insertion pour l'outil (68).

20. Système de construction selon l'une quelconque des revendications 17 à 19,
**caractérisé en ce que** le/chaque coulisseau de verrouillage (64) peut être bloqué dans sa position de verrouillage en particulier de manière électromagnétique pour empêcher un déplacement dans la position de libération.
